# EUROPEAN PATENT APPLICATION

(11) **EP 4 682 478 A1**
(43) Date of publication of application: **21.01.2026**
(21) Application number: 25188362.5
(22) Date of filing: 09.07.2025
(51) Int. Cl.: G01F 1/66, G01F 1/667

(54) **SYSTEM, METHOD, AND COMPUTER PROGRAM PRODUCT FOR SPEED-OF-SOUND TRACKING IN ULTRASONIC FLOW SENSORS**

(30) Priority: 19.07.2024 US 202418777720
(71) Applicant: Becton, Dickinson and Company, Franklin Lakes, NJ 07417 (US)
(72) Inventor: VERMA, Kaushal Kumar, Franklin Lakes, NJ (US)
(74) Representative: dompatent

(57) **Abstract**

Systems, methods, and computer program products are provided for speed-of-sound tracking in ultrasonic flow sensors. An example system includes an ultrasonic flow sensor and/or at least one processor. The ultrasonic flow sensor may include a flow tube, a first piezoelectric sensor/transducer, and/or a second piezoelectric sensor/transducer. The at least one processor may be configured to: provide an excitation pulse pattern including excitation pulses to the ultrasonic flow sensor to cause the ultrasonic flow sensor to transmit and receive at least one ultrasonic signal between the first and second piezoelectric sensors/transducers, the excitation pulses including different pulse widths and/or different voltage levels; receive, from the ultrasonic flow sensor, a time-series waveform that includes amplitudes of the at least one ultrasonic signal sampled at a plurality of time points; identify an attribute of the time-series waveform; and determine, based on the attribute, a transit time of the at least one ultrasonic signal.

## Description

### CROSS-REFERENCE TO RELATED APPLICATION

The present application claims priority to United States Patent Application No. 18/777,720, entitled "System, Method, and Computer Program Product for Speed-Of-Sound Tracking in Ultrasonic Flow Sensors" filed July 19, 2024, the disclosure of which is hereby incorporated by reference in its entirety.

### BACKGROUND

### Technical Field

This disclosure relates generally to ultrasonic flow sensors and, in some non-limiting embodiments or aspects, to systems, methods, and computer program products for speed-of-sound tracking in ultrasonic flow sensors.

### Technical Considerations

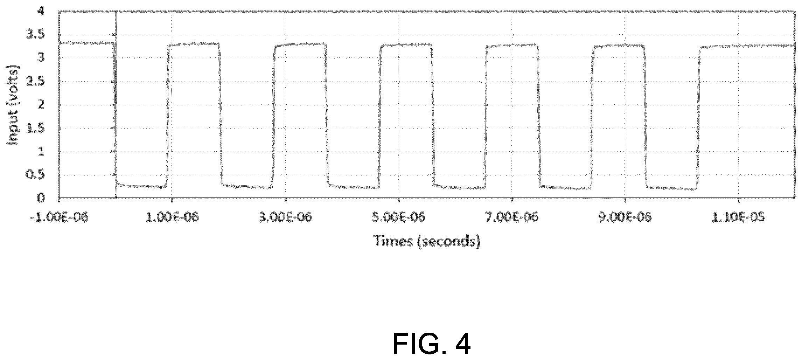

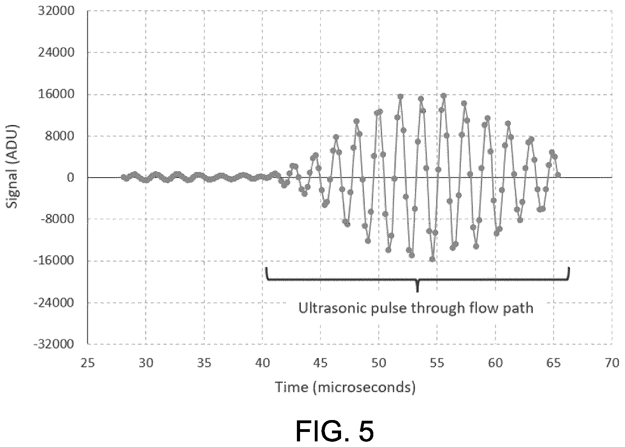

Existing ultrasonic flow sensors may use periodic pulse patterns for exciting crystals of transmitting piezoelectric sensors or transducers to transmit ultrasonic signals to receiving piezoelectric sensors or transducers that output time-series waveforms that that may be analyzed to calculate transit-times of the ultrasonic signals. For example, FIG. 4 is a graph of an example periodic excitation pulse pattern for exciting a piezoelectric sensor or transducer to transmit an ultrasonic signal, and FIG. 5 is a graph of an example time-series waveform obtained using a periodic excitation pulse pattern.

A time-series waveform may be analyzed to calculate a transit time of an ultrasonic signal between a transmitting piezoelectric sensor or transducer and a receiving piezoelectric sensor or transducer. For example, the transit time may be inversely proportional to a speed-of-sound of the ultrasonic signal in a fluid in a fluid flow path of the ultrasonic flow sensor. Transit-time may be calculated by identifying one of the peaks of the waveform (or one of the locations where the waveform crosses a zero (0) signal line in the graph, called a zero-crossing). However, as shown in FIGS. 4 and 5, using a periodic pulse pattern may lead to a gradually changing output waveform including several cycles, and identifying a peak (or a zero-crossing) of a same cycle may be difficult. For example, an incorrect peak may be identified or selected if an amplitude of the output waveform is low or if the waveform changes slightly due to external factors. Identification or selection of an incorrect peak (or an incorrect zero-crossing) may result in significant flow-measurement error and/or limitations in a type of fluid that can be used with an ultrasonic flow sensor.

### SUMMARY

Accordingly, provided are improved systems, methods, and computer program products for speed-of-sound tracking in ultrasonic flow sensors.

According to non-limiting embodiments or aspects, provided is a system including: an ultrasonic flow sensor that includes a flow tube, a first piezoelectric sensor or transducer arranged at an upstream position of the flow tube, and a second piezoelectric sensor or transducer arranged at a downstream position of the flow tube; and at least one processor configured to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the at least one processor is configured to identify the attribute of the time-series waveform by: applying at least one pattern matching algorithm to the time-series waveform.

In some non-limiting embodiments or aspects, the at least one processor is configured to identify the attribute of the time-series waveform by: comparing the time-series waveform to at least one reference time-series waveform, wherein the at least one reference time-series waveform is determined based on a plurality of time-series waveforms generated by a plurality of ultrasonic flow sensors in response to the excitation pulse pattern.

In some non-limiting embodiments or aspects, the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

In some non-limiting embodiments or aspects, the at least one processor is further configured to: provide an indication associated with the transit time of the at least one ultrasonic signal.

In some non-limiting embodiments or aspects, the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output from the machine learning model the peak or the zero-crossing of the time-series waveform.

According to non-limiting embodiments or aspects, provided is an ultrasonic flow sensor including: a flow tube; a first piezoelectric sensor or transducer arranged at an upstream position of the flow tube; a second piezoelectric sensor or transducer arranged at a downstream position of the flow tube; and at least one processor configured to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the at least one processor is configured to identify the attribute of the time-series waveform by: applying at least one pattern matching algorithm to the time-series waveform.

In some non-limiting embodiments or aspects, the at least one processor is configured to identify the attribute of the time-series waveform by: comparing the time-series waveform to at least one reference time-series waveform, wherein the at least one reference time-series waveform is determined based on a plurality of time-series waveforms generated by a plurality of ultrasonic flow sensors in response to the excitation pulse pattern.

In some non-limiting embodiments or aspects, the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

In some non-limiting embodiments or aspects, the at least one processor is further configured to: provide an indication associated with the transit time of the at least one ultrasonic signal.

In some non-limiting embodiments or aspects, the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output.

According to non-limiting embodiments or aspects, provided is a method for speed-of-sound tracking in an ultrasonic flow sensor that includes a flow tube, a first piezoelectric sensor or transducer arranged at an upstream position of the flow tube, and a second piezoelectric sensor or transducer arranged at a downstream position of the flow tube, the method including: providing, with at least one processor, an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receiving, with the at least one processor, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identifying, with the at least one processor, an attribute of the time-series waveform; and determining, with the at least one processor, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, identifying, with the at least one processor, the attribute of the time-series waveform includes: applying, with the at least one processor, at least one pattern matching algorithm to the time-series waveform.

In some non-limiting embodiments or aspects, identifying, with the at least one processor, the attribute of the time-series waveform includes: comparing, with the at least one processor, the time-series waveform to at least one reference time-series waveform, wherein the at least one reference time-series waveform is determined based on a plurality of time-series waveforms generated by a plurality of ultrasonic flow sensors in response to the excitation pulse pattern.

In some non-limiting embodiments or aspects, the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

In some non-limiting embodiments or aspects, the method further includes: providing, with the at least one processor, an indication associated with the transit time of the at least one ultrasonic signal.

In some non-limiting embodiments or aspects, the attribute of the time-series waveform includes a peak or a zero-crossing of the time-series waveform, wherein identifying, with the at least one processor, the attribute of the time-series waveform includes analyzing, with the at least one processor, the time-series waveform to identify the peak or the zero-crossing of the time-series waveform, wherein the at least one processor determines, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof, and wherein analyzing, with the at least one processor, the time-series waveform to identify the peak or the zero-crossing of the time-series waveform includes providing time-series waveform data associated with the time-series waveform as input to a machine learning model trained to identify the peak or the zero-crossing of the time-series waveform and receiving as output from the machine learning model the peak or the zero-crossing of the time-series waveform.

According to non-limiting embodiments or aspects, provided is a computer program product including a non-transitory computer readable medium including program instructions for speed-of-sound tracking in an ultrasonic flow sensor that includes a flow tube, a first piezoelectric sensor or transducer arranged at an upstream position of the flow tube, and a second piezoelectric sensor or transducer arranged at a downstream position of the flow tube which, when executed by at least one processor, cause the at least one processor to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the program instructions, when executed by the at least one processor, cause the at least one processor to identify the attribute of the time-series waveform by: applying at least one pattern matching algorithm to the time-series waveform.

In some non-limiting embodiments or aspects, the program instructions, when executed by the at least one processor, cause the at least one processor to identify the attribute of the time-series waveform by: comparing the time-series waveform to at least one reference time-series waveform.

In some non-limiting embodiments or aspects, the at least one reference time-series waveform is determined based on a plurality of time-series waveforms generated by a plurality of ultrasonic flow sensors in response to the excitation pulse pattern.

In some non-limiting embodiments or aspects, the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

In some non-limiting embodiments or aspects, the program instructions, when executed by the at least one processor, further cause the at least one processor to: provide an indication associated with the transit time of the at least one ultrasonic signal.

In some non-limiting embodiments or aspects, the attribute of the time-series waveform includes a peak or a zero-crossing of the time-series waveform, wherein the program instructions, when executed by the at least one processor, cause the at least one processor to identify the attribute of the time-series waveform by analyzing the time-series waveform to identify the peak or the zero-crossing of the time-series waveform, and wherein the program instructions, when executed by the at least one processor, cause the at least one processor determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

In some non-limiting embodiments or aspects, the program instructions, when executed by the at least one processor, cause the at least one processor to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output from the machine learning model the peak or the zero-crossing of the time-series waveform.

Further non-limiting embodiments or aspects are set forth in the following numbered clauses:
Clause 1. A system comprising: an ultrasonic flow sensor that includes a flow tube, a first piezoelectric sensor or transducer arranged at an upstream position of the flow tube, and a second piezoelectric sensor or transducer arranged at a downstream position of the flow tube; and at least one processor configured to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 2. The system of clause 1, wherein the at least one processor is configured to identify the attribute of the time-series waveform by: applying at least one pattern matching algorithm to the time-series waveform.
Clause 3. The system of clause 1 or clause 2, wherein the at least one processor is configured to identify the attribute of the time-series waveform by: comparing the time-series waveform to at least one reference time-series waveform, wherein the at least one reference time-series waveform is determined based on a plurality of time-series waveforms generated by a plurality of ultrasonic flow sensors in response to the excitation pulse pattern.
Clause 4. The system of any of clauses 1-3, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.
Clause 5. The system of any of clauses 1-4, wherein the at least one processor is further configured to: provide an indication associated with the transit time of the at least one ultrasonic signal.
Clause 6. The system of any of clauses 1-5, wherein the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 7. The system of any of clauses 1-6, wherein the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output from the machine learning model the peak or the zero-crossing of the time-series waveform.
Clause 8. An ultrasonic flow sensor comprising: a flow tube; a first piezoelectric sensor or transducer arranged at an upstream position of the flow tube; a second piezoelectric sensor or transducer arranged at a downstream position of the flow tube; and at least one processor configured to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 9. The ultrasonic flow sensor of clause 9, wherein the at least one processor is configured to identify the attribute of the time-series waveform by: applying at least one pattern matching algorithm to the time-series waveform.
Clause 10. The ultrasonic flow sensor of clause 8 or clause 9, wherein the at least one processor is configured to identify the attribute of the time-series waveform by: comparing the time-series waveform to at least one reference time-series waveform, wherein the at least one reference time-series waveform is determined based on a plurality of time-series waveforms generated by a plurality of ultrasonic flow sensors in response to the excitation pulse pattern.
Clause 11. The ultrasonic flow sensor of any of clauses 8-10, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.
Clause 12. The ultrasonic flow sensor of any of clauses 8-11, wherein the at least one processor is further configured to: provide an indication associated with the transit time of the at least one ultrasonic signal.
Clause 13. The ultrasonic flow sensor of any of clauses 8-12, wherein the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 14. The ultrasonic flow sensor of any of clauses 8-13, wherein the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output.
Clause 15. A method for speed-of-sound tracking in an ultrasonic flow sensor that includes a flow tube, a first piezoelectric sensor or transducer arranged at an upstream position of the flow tube, and a second piezoelectric sensor or transducer arranged at a downstream position of the flow tube, the method comprising: providing, with at least one processor, an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receiving, with the at least one processor, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identifying, with the at least one processor, an attribute of the time-series waveform; and determining, with the at least one processor, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 16. The method of clause 15, wherein identifying, with the at least one processor, the attribute of the time-series waveform includes: applying, with the at least one processor, at least one pattern matching algorithm to the time-series waveform.
Clause 17. The method of clause 15 or clause 16, wherein identifying, with the at least one processor, the attribute of the time-series waveform includes: comparing, with the at least one processor, the time-series waveform to at least one reference time-series waveform, wherein the at least one reference time-series waveform is determined based on a plurality of time-series waveforms generated by a plurality of ultrasonic flow sensors in response to the excitation pulse pattern.
Clause 18. The method of any of clauses 15-17, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.
Clause 19. The method of any of clauses 15-18, further comprising: providing, with the at least one processor, an indication associated with the transit time of the at least one ultrasonic signal.
Clause 20. The method of any of clauses 15-18, wherein the attribute of the time-series waveform includes a peak or a zero-crossing of the time-series waveform, wherein identifying, with the at least one processor, the attribute of the time-series waveform includes analyzing, with the at least one processor, the time-series waveform to identify the peak or the zero-crossing of the time-series waveform, wherein the at least one processor determines, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof, and wherein analyzing, with the at least one processor, the time-series waveform to identify the peak or the zero-crossing of the time-series waveform includes providing time-series waveform data associated with the time-series waveform as input to a machine learning model trained to identify the peak or the zero-crossing of the time-series waveform and receiving as output from the machine learning model the peak or the zero-crossing of the time-series waveform.
Clause 21. A computer program product including a non-transitory computer readable medium including program instructions for speed-of-sound tracking in an ultrasonic flow sensor that includes a flow tube, a first piezoelectric sensor or transducer arranged at an upstream position of the flow tube, and a second piezoelectric sensor or transducer arranged at a downstream position of the flow tube which, when executed by at least one processor, cause the at least one processor to: provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof; receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points; identify an attribute of the time-series waveform; and determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 22. The computer program product of clause 21, wherein the program instructions, when executed by the at least one processor, cause the at least one processor to identify the attribute of the time-series waveform by: applying at least one pattern matching algorithm to the time-series waveform.
Clause 23. The computer program product of clause 21 or clause 22, wherein the program instructions, when executed by the at least one processor, cause the at least one processor to identify the attribute of the time-series waveform by: comparing the time-series waveform to at least one reference time-series waveform.
Clause 24. The computer program product of any of clauses 21-23, wherein the at least one reference time-series waveform is determined based on a plurality of time-series waveforms generated by a plurality of ultrasonic flow sensors in response to the excitation pulse pattern.
Clause 25. The computer program product of any of clauses 21-24, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.
Clause 26. The computer program product of any of clauses 21-25, wherein the program instructions, when executed by the at least one processor, further cause the at least one processor to: provide an indication associated with the transit time of the at least one ultrasonic signal.
Clause 27. The computer program product of any of clauses 21-26, wherein the attribute of the time-series waveform includes a peak or a zero-crossing of the time-series waveform, wherein the program instructions, when executed by the at least one processor, cause the at least one processor to identify the attribute of the time-series waveform by analyzing the time-series waveform to identify the peak or the zero-crossing of the time-series waveform, and wherein the program instructions, when executed by the at least one processor, cause the at least one processor determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.
Clause 28. The computer program product of any of clauses 21-27, wherein the program instructions, when executed by the at least one processor, cause the at least one processor to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output from the machine learning model the peak or the zero-crossing of the time-series waveform.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIG. 1A is a schematic diagram of a system for in for speed-of-sound tracking in ultrasonic flow sensors, according to some non-limiting embodiments or aspects;
FIG. 1B is a perspective view of example components of a flow sensor system of the system for speed-of-sound tracking in ultrasonic flow sensors of FIG. 1A, according to some non-limiting embodiments or aspects;
FIG. 1C is a cross-sectional view of example components of an ultrasonic flow sensor of a flow sensor system of the system for speed-of-sound tracking in ultrasonic flow sensors of FIG. 1A, according to some non-limiting embodiments or aspects;
FIG. 2 is a schematic diagram of example components of one or more devices or systems of FIG. 1A, according to some non-limiting embodiments or aspects;
FIG. 3 is a flow diagram of a method for speed-of-sound tracking in ultrasonic flow sensors, according to some non-limiting embodiments or aspects;
FIG. 4 is a graph of an example periodic excitation pulse pattern for exciting a piezoelectric sensor or transducer to transmit an ultrasonic signal;
FIG. 5 is a graph of an example time-series waveform obtained using a periodic excitation pulse pattern;
FIG. 6 is a graph of an excitation pulse pattern, according to some non-limiting embodiments or aspects; and
FIG. 7 is a graph of a waveform obtained using an excitation pulse pattern, according to some non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects of the disclosed subject matter. Hence, specific dimensions and other physical characteristics related to the embodiments or aspects disclosed herein are not to be considered as limiting.

Some non-limiting embodiments or aspects are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

As used herein, the term "communication" may refer to the reception, receipt, transmission, transfer, provision, and/or the like of data (e.g., information, signals, messages, instructions, commands, and/or the like). For one unit (e.g., a device, a system, a component of a device or system, combinations thereof, and/or the like) to be in communication with another unit means that the one unit is able to directly or indirectly receive information from and/or transmit information to the other unit. This may refer to a direct or indirect connection (e.g., a direct communication connection, an indirect communication connection, and/or the like) that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit processes information received from the first unit and communicates the processed information to the second unit. In some non-limiting embodiments or aspects, a message may refer to a network packet (e.g., a data packet and/or the like) that includes data. It will be appreciated that numerous other arrangements are possible.

As used herein, the term "computing device" may refer to one or more electronic devices configured to process data. A computing device may, in some examples, include the necessary components to receive, process, and output data, such as a processor, a display, a memory, an input device, a network interface, and/or the like. A computing device may be a mobile device. As an example, a mobile device may include a cellular phone (e.g., a smartphone or standard cellular phone), a portable computer, a wearable device (e.g., watches, glasses, lenses, clothing, and/or the like), a personal digital assistant (PDA), and/or other like devices. A computing device may also be a desktop computer or other form of non-mobile computer.

As used herein, the term "server" may refer to or include one or more computing devices that are operated by or facilitate communication and processing for multiple parties in a network environment, such as the Internet, although it will be appreciated that communication may be facilitated over one or more public or private network environments and that various other arrangements are possible. Further, multiple computing devices (e.g., servers, point-of-sale (POS) devices, mobile devices, etc.) directly or indirectly communicating in the network environment may constitute a "system."

As used herein, the term "system" may refer to one or more computing devices or combinations of computing devices (e.g., processors, servers, client devices, software applications, components of such, and/or the like). Reference to "a device," "a server," "a processor," and/or the like, as used herein, may refer to a previously-recited device, server, or processor that is recited as performing a previous step or function, a different device, server, or processor, and/or a combination of devices, servers, and/or processors. For example, as used in the specification and the claims, a first device, a first server, or a first processor that is recited as performing a first step or a first function may refer to the same or different device, server, or processor recited as performing a second step or a second function.

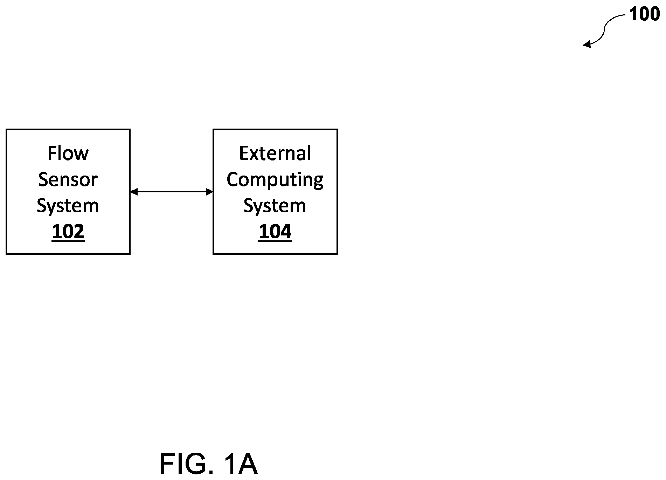

Referring now to FIG. 1A, shown is a schematic diagram of a system for for speed-of-sound tracking in ultrasonic flow sensors, according to some non-limiting embodiments or aspects. As shown in FIG. 1A, system 100 may include flow sensor system 102 and/or external computing system 104. Systems and/or devices of system 100 can interconnect via wired connections, wireless connections, or a combination of wired and wireless connections.

Flow sensor system 102 may include one or more devices capable of receiving information and/or data from external computing device 104 and/or communicating information and/or data to external computing device 104. For example, flow sensor system 102 may include one or more computing systems including one or more processors (e.g., one or more computing devices, one or more mobile computing devices, one or more digital signal processors (DSPs), etc.). In some non-limiting embodiments or aspects, flow sensor system 102 may include the flow sensor system in U.S. Patent Application Publication No. 2021/0231471 or U.S. Patent No. 10,072,959, the contents of each of which are hereby incorporated by reference in their entirety.

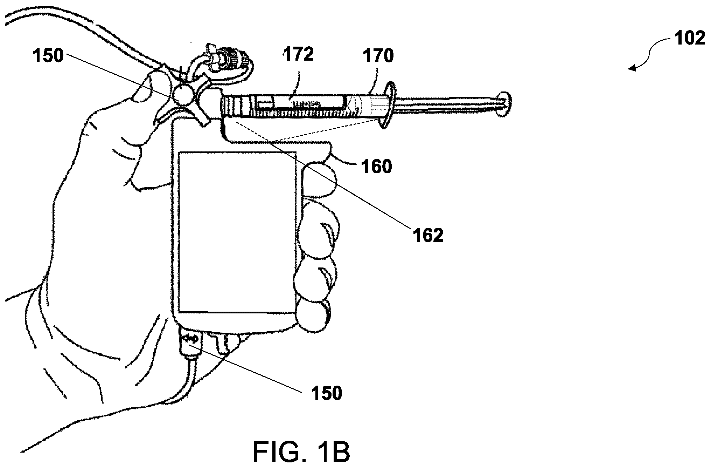

Referring also to FIG. 1B, FIG. 1B is a perspective view of example components of a flow sensor system of the system for speed-of-sound tracking in ultrasonic flow sensors of FIG. 1A, according to some non-limiting embodiments or aspects. As shown in FIG. 1B, flow sensor system 102 may include ultrasonic flow sensor 150 and/or base 160. For example, ultrasonic flow sensor 150 may be configured to be removably, physically, and/or electrically connected to base 160. Syringe 170 may be configured to physically connect to flow sensor 160 (e.g., via a fluid injection port, etc.). Syringe 170 may include tag or label 172, which may include an NFC tag (e.g., an RFID tag, etc.) embedded in tag or label 104, a barcode, a QR code, an AprilTag, or the like. Base 160 may include at least one sensor 162 configured to read and/or decode medication information from tag or label 172 on syringe 170. The medication information may include at least one expected medication type associated with at least one medication contained in syringe 170, such as a medication identifier (e.g., a unique medication identifier associated with the medication contained in syringe 170, etc.). For example, the at least one sensor 162 of base 160 may include one or more computing devices, chips, contactless transmitters, contactless transceivers, NFC transmitters/receivers, RFID transmitters/receivers, contact based transmitters/receivers, optical sensors or scanners, barcode readers, or the like that are configured to read and/or decode the information stored or encapsulated in tag or label 172.

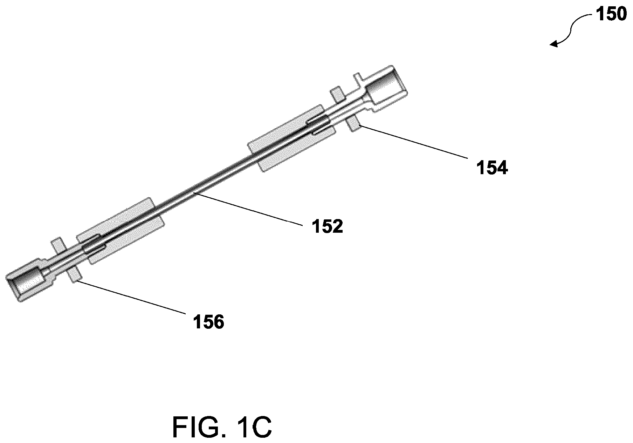

Referring also to FIG. 1C, FIG. 1C is a cross-sectional view of components of an ultrasonic flow sensor of a flow sensor system of the system for speed-of-sound tracking in ultrasonic flow sensors of FIG. 1A, according to some non-limiting embodiments or aspects. As shown in FIG. 1C, ultrasonic flow sensor 150 may include flow tube 152 that defines a fluid flow path of ultrasonic flow sensor 150, first piezoelectric sensor or transducer 154 arranged at an upstream position of flow tube 152, and/or second piezoelectric sensor or transducer 156 arranged at a downstream position of flow tube 152.

Ultrasonic flow sensor 150 may be configured to generate a time-series corresponding to (e.g., corresponding to, representative of, quantifying, measuring, etc.) a flow of at least one fluid through a fluid flow path of ultrasonic flow sensor 150. For example, first piezoelectric sensor or transducer 154 and second piezoelectric sensor or transducer 156 may be configured to generate the time-series corresponding to the flow of the at least one fluid through the fluid flow path of ultrasonic flow sensor 150. As an example, first piezoelectric sensor or transducer 154 and second piezoelectric sensor or transducer 156 may each be configured to operate as both an ultrasonic transmitter and an ultrasonic receiver. In such an example, ultrasonic flow sensor 150 may be configured to operate by alternately transmitting and receiving a burst of ultrasound between the two transducers (e.g., "up" and "down" signals, etc.) by measuring the transit time that it takes for sound to travel between the two transducers in both directions. An analog-to-digital converter (ADC) may sample the signal received at the receiving transducer at a plurality of time points to generate a time-series that includes the plurality of amplitudes sampled at the plurality of time points. The difference in the transit time (e.g., Δ time, etc.) measured may be directly proportional to a velocity of the fluid in the fluid flow path. A plurality of differences in transit time (e.g., a plurality of Δ times, etc.) may be represented as a time-series that includes at least one of a plurality of amplitudes at a plurality of time points, a plurality of phases at the plurality of time points, or any combination thereof. For example, an average Δt may be calculated over one or more "up" and "down" signal pairs or cycles, the magnitude of which may be proportional to the flow rate of the fluid through the fluid flow path of ultrasonic flow sensor 150. As an example, a Δt may be converted to a velocity of the fluid in flow tube 102 using an angle of the ultrasound signal path, which may be calculated by knowing the speed of sound of flow tube 102 and the fluid. This angle may be used with trigonometry to convert the ultrasound path into a straight line in flow tube 102, which may be the velocity of the liquid in flow tube 102. The velocity of the fluid may be converted into a flow rate by multiplying the velocity by a cross-sectional area of the pipe, and a volume of the fluid delivered may be calculated by multiplying the flow rate by time.

Ultrasonic flow sensor 150 may be configured to continually generate and provide the time-series corresponding to the flow of at least one fluid through a fluid flow path of ultrasonic flow sensor 150 during the flow of at least one fluid through a fluid flow path of ultrasonic flow sensor 150 (e.g., as the flow of at least one fluid through a fluid flow path of ultrasonic flow sensor 150 occurs and progresses, etc.).

Flow sensor system 102 and/or external computing system 104 may be configured to alternately provide an excitation pulse pattern including a number of excitation pulses to first piezoelectric sensor or transducer 154 and second piezoelectric sensor or transducer 156 to cause first piezoelectric sensor or transducer 154 and second piezoelectric sensor or transducer 156 to alternately transmit and receive the burst of ultrasound (e.g., a ultrasonic signal, etc.) between the two transducers. For example, first piezoelectric sensor or transducer 154 may be configured to transmit a first ultrasonic signal to second piezoelectric sensor or transducer 156, second piezoelectric sensor or transducer 156 may be configured to transmit a second ultrasonic signal to first piezoelectric transducer 156, second piezoelectric sensor or transducer 156 may be configured to receive the first ultrasonic signal transmitted by first piezoelectric sensor or transducer 154 (which may be sampled by an ADC to generate the time-series), and/or first piezoelectric sensor or transducer 156 may be configured to receive the second ultrasonic signal transmitted by second piezoelectric sensor or transducer 156 (which may be sampled by an ADC to generate the time-series).

External computing system 104 may include one or more devices capable of receiving information and/or data from flow sensor system 102 and/or communicating information and/or data to flow sensor system 102. For example, external computing system 104 may include one or more computing systems including one or more processors (e.g., one or more computing devices, one or more mobile computing devices, one or more servers, etc.). In some non-limiting embodiments or aspects, external computing system 104 includes a nurse station in a hospital, a hospital information system (HIS), an electronic medical records (EMR) system, a radiology information system (RIS), a picture archiving and communication system (PACS), a laboratory information system (LIS), a smart phone, a tablet computer, any combination thereof, and/or the like.

The number and arrangement of systems and devices shown in FIGS. 1A-1C are provided as an example. There may be additional systems or devices, fewer systems or devices, different systems or devices, or differently arranged systems or devices than those shown in FIGS. 1A-1C. Furthermore, two or more systems or devices shown in FIGS. 1A-1C may be implemented within a single system or device, or a single system or device shown in FIGS. 1A-1C may be implemented as multiple, distributed systems or devices. Additionally or alternatively, a set of systems (e.g., one or more systems) or a set of devices (e.g., one or more devices) of system 100 may perform one or more functions described as being performed by another set of systems or another set of devices of system 100.

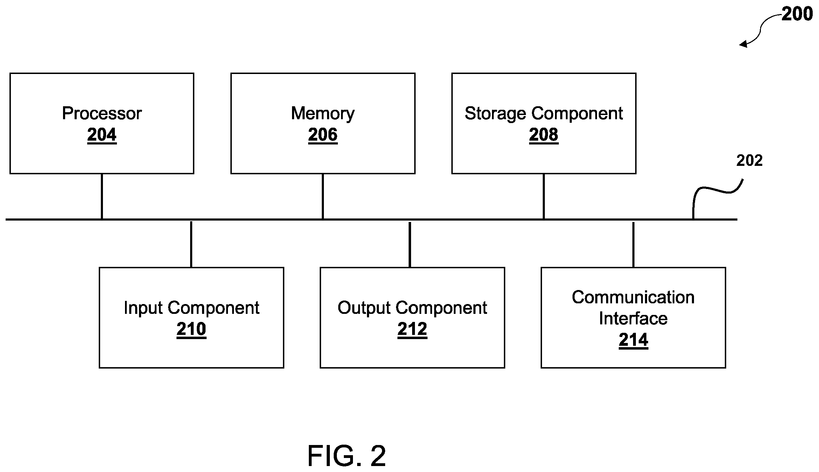

Referring now to FIG. 2, shown is a diagram of example components of a device 200 according to non-limiting embodiments. Device 200 may correspond to flow sensor system 102 and/or external computing system 104 in FIG. 1A, as an example. In some non-limiting embodiments, such systems or devices may include at least one device 200 and/or at least one component of device 200. The number and arrangement of components shown are provided as an example. In some non-limiting embodiments, device 200 may include additional components, fewer components, different components, or differently arranged components than those shown. Additionally, or alternatively, a set of components (e.g., one or more components) of device 200 may perform one or more functions described as being performed by another set of components of device 200.

As shown in FIG. 2, device 200 may include a bus 202, a processor 204, memory 206, a storage component 208, an input component 210, an output component 212, and a communication interface 214. Bus 202 may include a component that permits communication among the components of device 200. In some non-limiting embodiments, processor 204 may be implemented in hardware, firmware, or a combination of hardware and software. For example, processor 204 may include a processor (e.g., a central processing unit (CPU), a graphics processing unit (GPU), an accelerated processing unit (APU), etc.), a microprocessor, a digital signal processor (DSP), or any processing component (e.g., a field-programmable gate array (FPGA), an application-specific integrated circuit (ASIC), etc.) that can be programmed to perform a function. Memory 206 may include random access memory (RAM), read only memory (ROM), or another type of dynamic or static storage device (e.g., flash memory, magnetic memory, optical memory, etc.) that stores information and/or instructions for use by processor 204.

With continued reference to FIG. 2, storage component 208 may store information and/or software related to the operation and use of device 200. For example, storage component 208 may include a hard disk (e.g., a magnetic disk, an optical disk, a magneto-optic disk, a solid-state disk, etc.) or another type of computer-readable medium. Input component 210 may include a component that permits device 200 to receive information, such as via user input (e.g., a touch screen display, a keyboard, a keypad, a mouse, a button, a switch, a microphone, etc.). Additionally, or alternatively, input component 210 may include a sensor for sensing information (e.g., a global positioning system (GPS) component, an accelerometer, a gyroscope, an actuator, etc.). Output component 212 may include a component that provides output information from device 200 (e.g., a display, a speaker, one or more light-emitting diodes (LEDs), etc.). Communication interface 214 may include a transceiver-like component (e.g., a transceiver, a separate receiver and transmitter, etc.) that enables device 200 to communicate with other devices, such as via a wired connection, a wireless connection, or a combination of wired and wireless connections. Communication interface 214 may permit device 200 to receive information from another device or provide information to another device. For example, communication interface 214 may include an Ethernet interface, an optical interface, a coaxial interface, an infrared interface, a radio frequency (RF) interface, a universal serial bus (USB) interface, a Wi-Fi^{®} interface, a cellular network interface, or the like.

Device 200 may perform one or more processes described herein. Device 200 may perform these processes based on processor 204 executing software instructions stored by a computer-readable medium, such as memory 206 or storage component 208. A computer-readable medium may include any non-transitory memory device. A memory device includes memory space located inside of a single physical storage device or memory space spread across multiple physical storage devices. Software instructions may be read into memory 206 and/or storage component 208 from another computer-readable medium or from another device via communication interface 214. When executed, software instructions stored in memory 206 or storage component 208 may cause processor 204 to perform one or more processes described herein. Additionally, or alternatively, hardwired circuitry may be used in place of or in combination with software instructions to perform one or more processes described herein. Thus, embodiments described herein are not limited to any specific combination of hardware circuitry and software. The term "configured to," as used herein, may refer to a specific arrangement of software, device(s), or hardware for performing or enabling one or more of the innovative functions (e.g., actions, processes, steps of a process, or the like) described herein. For example, "a processor configured to" may refer to a processor that executes specific software instructions (e.g., program code) that cause the processor to perform one or more functions related to fluid flow detection and/or identification.

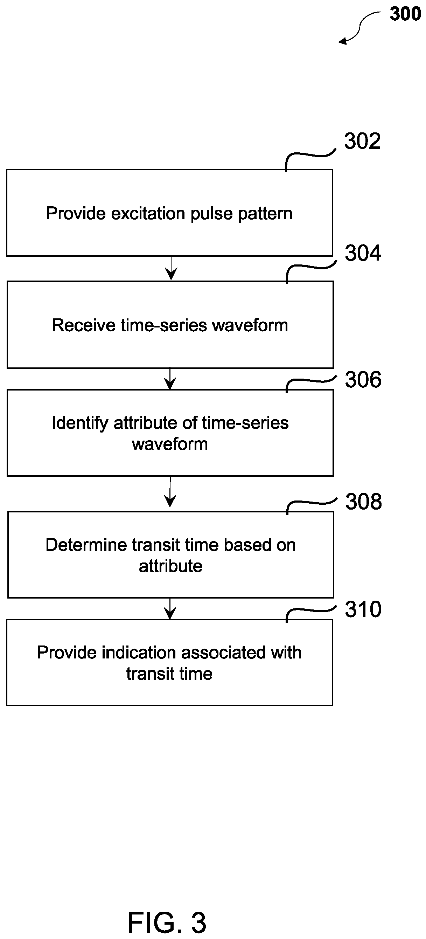

Referring now to FIG. 3, shown is a flow diagram for a method 300 for speed-of-sound tracking in ultrasonic flow sensors, according to some non-limiting embodiments or aspects. The steps shown in FIG. 3 are for example purposes only. It will be appreciated that additional, fewer, different, or a different order of steps may be used in some non-limiting embodiments or aspects. In some non-limiting embodiments or aspects, a step may be automatically performed in response to performance or completion of a prior step.

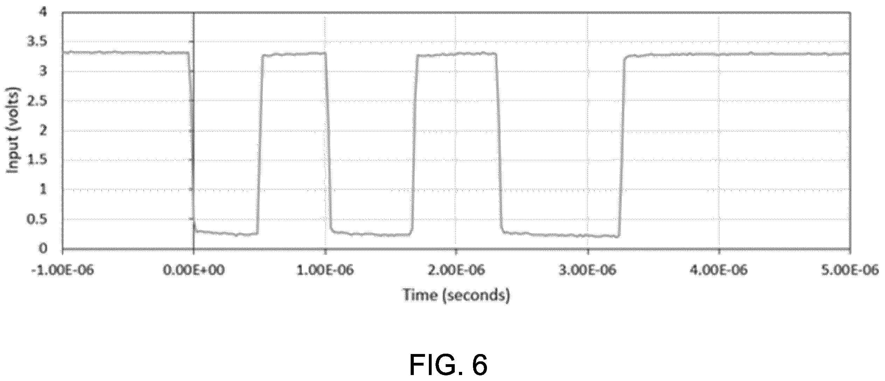

As shown in FIG. 3, at step 302, method 300 includes providing an excitation pulse pattern including a plurality of excitation pulses to at least one of a first piezoelectric sensor or transducer, a second piezoelectric sensor or transducer, or any combination thereof of an ultrasonic flow sensor to cause the least one of the first piezoelectric sensor or transducer, the second piezoelectric sensor or transducer, or any combination thereof of the ultrasonic flow sensor to transmit at least one ultrasonic signal to the other of the first piezoelectric sensor or transducer, the second piezoelectric sensor or transducer, or any combination thereof. For example, flow sensor system 102 and/or external computing system 104 may provide an excitation pulse pattern including a plurality of excitation pulses to at least one of first piezoelectric sensor or transducer 154, second piezoelectric sensor or transducer 156, or any combination thereof to cause the least one of first piezoelectric sensor or transducer 154, second piezoelectric sensor or transducer 156, or any combination thereof to transmit at least one ultrasonic signal to the other of first piezoelectric sensor or transducer 154, second piezoelectric sensor or transducer 156, or any combination thereof. The plurality of excitation pulses of the excitation pulse pattern includes at least one of the following: a plurality of different pulse widths, a plurality of different voltage levels, or any combination thereof. For example, one or more excitation pulses of the plurality of excitation pulses have a different pulse width and/or a different voltage level than one or more other excitation pulses of the plurality of excitation pulses. As an example, and referring to FIG. 6, which is a graph of an excitation pulse pattern, according to some non-limiting embodiments or aspects, a width of each pulse of a plurality of excitation pluses of an excitation pulse pattern may be different than a width of each other pulse of the plurality of excitation pulses of the excitation pulse pattern.

In some non-limiting embodiments or aspects, the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof. For example, flow sensor system 102 and/or external computing system 104 may provide a first excitation pulse pattern including a first number of excitation pulses to at least one of first piezoelectric sensor or transducer 154, second piezoelectric sensor or transducer 156, or any combination thereof to cause the least one of first piezoelectric sensor or transducer 154, second piezoelectric sensor or transducer 156, or any combination thereof to transmit at least one first ultrasonic signal to the other of first piezoelectric sensor or transducer 154, second piezoelectric sensor or transducer 156, or any combination thereof, and flow sensor system 102 and/or external computing system 104 may provide a second excitation pulse pattern including a second number of excitation pulses different than the first number of excitation pulses to the at least one of first piezoelectric sensor or transducer 154, second piezoelectric sensor or transducer 156, or any combination thereof to cause the least one of first piezoelectric sensor or transducer 154, second piezoelectric sensor or transducer 156, or any combination thereof to transmit at least one second ultrasonic signal to the other of first piezoelectric sensor or transducer 154, second piezoelectric sensor or transducer 156, or any combination thereof. In this way, a first time-series waveform generated based on receipt of the at least one first ultrasonic signal may be different or unique from a second time-series waveform generated based on receipt of the at least one second ultrasonic signal.

Accordingly, non-limiting embodiments or aspects of the present disclosure may provide a custom excitation pattern that results in an output waveform with unique signatures, which may enable a peak or a zero-crossing of the waveform to be more easily identified as described herein (e.g., the uniqueness of the output waveform may be utilized in consistently identifying the peak (or zero-crossing) of a same cycle, etc.).

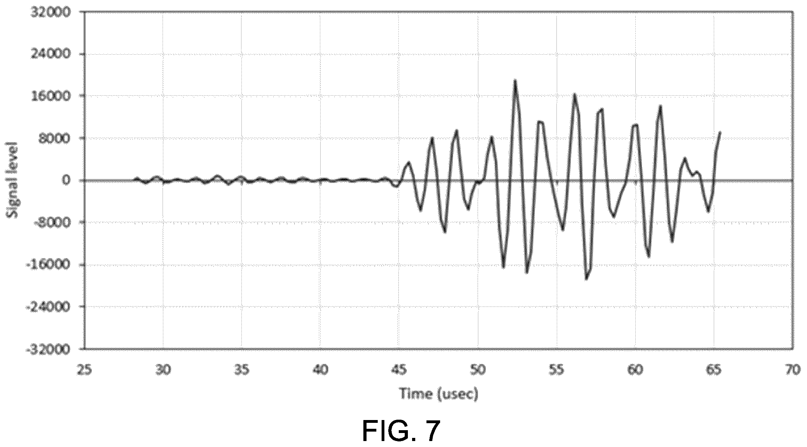

As shown in FIG. 3, at step 304, method 300 includes receiving, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points. For example, flow sensor system 102 and/or external computing system 104 may receive, from ultrasonic flow sensor 102, a time-series waveform that includes a plurality of amplitudes of the at least one ultrasonic signal received at the other of first piezoelectric sensor or transducer 154, second piezoelectric sensor or transducer 156, or any combination thereof sampled at a plurality of time points. As an example, and referring to FIG. 7, which is a graph of a waveform obtained using an excitation pulse pattern, according to some non-limiting embodiments or aspects, a unique time-series waveform may be generated in response to an excitation pulse pattern that includes a plurality of different pulse widths and/or a plurality of different voltage levels, or any combination thereof, which may enable a peak or a zero-crossing of the waveform to be more easily identified as described herein (e.g., the uniqueness of the output waveform may be utilized in consistently identifying the peak (or zero-crossing) of a same cycle, etc.).

As shown in FIG. 3, at step 306, method 300 includes identifying an attribute of the time-series waveform. Identifying the attribute may include analyzing the time-series waveform to identify a peak or a zero-crossing of the time-series waveform. For example, flow sensor system 102 and/or external computing system 104 may identify a peak or a zero-crossing of the time-series waveform (or other attribute of the time-series waveform. As an example, wherein the attribute of the time-series waveform may include a peak or a zero-crossing (or other attribute) of the time-series waveform, and flow sensor system 102 and/or external computing system 104 may identify the attribute of the time-series waveform by analyzing the time-series waveform to identify the peak or the zero-crossing of the time-series waveform. In some implementations, analyzing the time-series waveform may include providing time-series waveform data associated with or representative of the time-series waveform to a machine-learning model trained to identify a peak, a zero-crossing, or other attribute of the time-series waveform to provide a characterization of the time-series waveform data (e.g., an indication of the peak or zero-crossing of the time-series waveform, etc.). For example, flow sensor system 102 and/or external computing system 104 may analyze the time-series waveform to identify the peak or the zero-crossing of the time-series waveform by providing time-series waveform data associated with the time-series waveform as input to the machine learning model trained to identify the peak or the zero-crossing of the time-series waveform and receiving as output from the machine learning model the peak or the zero-crossing of the time-series waveform.

In some non-limiting embodiments or aspects, flow sensor system 102 and/or external computing system 104 identifies the peak or zero-crossing of the time-series waveform by: applying at least one pattern matching algorithm to the time-series waveform. Peak detection may include identifying a maximum value within the time-series. In some implementations, peak detection may include providing an average of a number of top readings (e.g., an average of the top 3, 4, 5, or 10 readings, etc.). This sampling may smooth any outliers or noise within the waveform. In some implementations, the pattern matching may look to a specific series of events (e.g., low-high-low, etc.) to determine which value to characterize as the peak or the zero-crossing. For example, the pattern matching may look to the fifth peak value after the waveform exceeds a threshold. For example, the at least one pattern matching algorithm may utilize a uniqueness of the time-series waveform to identify the peak or zero-crossing of the time-series waveform.

In some non-limiting embodiments or aspects, flow sensor system 102 and/or external computing system 104 identifies the peak or zero-crossing of the time-series waveform by: comparing the time-series waveform to at least one reference time-series waveform. The use of a reference waveform may be used to indicate when or at what level a peak or zero-crossing may be expected.

In some non-limiting embodiments or aspects, the at least one reference time-series waveform is determined based on a plurality of time-series waveforms generated by a plurality of ultrasonic flow sensors in response to the excitation pulse pattern. For example, flow sensor system 102 and/or external computing system 104 may obtain a plurality of time-series waveforms generated by a plurality of ultrasonic sensors 102 in response to the excitation pulse pattern and combine (e.g., average, etc.) the plurality of time-series wave forms to generate the at least one reference time-series waveform, which may be stored in a memory ultrasonic flow sensor 102 and/or in a database of reference waveforms.

As shown in FIG. 3, at step 308, method 300 includes determining, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof. For example, flow sensor system 102 and/or external computing system 104 may determine, based on attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof. As an example, the attribute of the time-series waveform may include a peak or a zero-crossing (or other attribute) of the time-series waveform, and flow sensor system 102 and/or external computing system 104 may determine, based on the peak or the zero-crossing (or other attribute) of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

As shown in FIG. 3, at step 310, method 300 includes providing an indication associated with the transit time of the at least one ultrasonic signal. For example, flow sensor system 102 and/or external computing system 104 may provide an indication associated with the transit time of the at least one ultrasonic signal. The indication may be a human perceivable output indicating the transit time of the at least one ultrasonic signal and/or a parameter calculated based thereon, such as a flow rate of a fluid through ultrasonic flow sensor 102, a volume of fluid delivered by ultrasonic flow sensor 102, and/or the like (e.g., provided via a speaker and/or a display of a reusable base of the flow sensor system in U.S. Patent Application Publication No. 2021/0231471, etc.). In some implementations, providing the indication may include storing a value in a location of a storage device for subsequent retrieval (e.g., in a memory of ultrasonic flow sensor 150, in a memory of flow sensory system, in a database etc.), transmitting a value directly to the recipient via at least one wired or wireless communication medium, transmitting or storing a reference to a value, and the like. The providing at step 310 may additionally or alternatively include encoding, decoding, encrypting, decrypting, validating, verifying, and the like via a hardware element.

In some non-limiting embodiments or aspects, flow sensor system 102 and/or external computing system 104 may provide the indication associated with the transit time of the at least one ultrasonic signal in association with patient data associated with a patient, procedure data associated with a patient procedure associated with the patient, caregiver data associated with a caregiver (e.g., a nurse, a doctor, etc.), any combination thereof, or the like. Patient data associated with a patient may include a patient identifier associated with the patient (e.g., a unique patient identifier, etc.), patient demographics (e.g., a name, an age, a sex, a weight, a height, a birthdate, an address, etc.), a list of medication allergies associated with the patient, a list of medication doses delivered, being delivered, and/or pending for delivery to the patient, any combination thereof, or the like. Procedure data may include a procedure identifier associated with the procedure (e.g., a unique procedure identifier, etc.), one or more medical devices associated with the procedure, a name of the procedure, a state of the procedure (e.g., scheduled for a future date and time, currently being performed, previously performed a previous date and time, etc.), a caregiver associated with the procedure, a patient associated with the procedure, any combination thereof, or the like. Caregiver data may include a caregiver identifier associated with the caregiver (e.g., a unique caregiver identifier, etc.), a name of the caregiver, any combination thereof, or the like.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

Aspects described include artificial intelligence or other operations whereby the system processes inputs and generates outputs with apparent intelligence. The artificial intelligence may be implemented in whole or in part by a model. A model may be implemented as a machine learning model. The learning may be supervised, unsupervised, reinforced, or a hybrid learning whereby multiple learning techniques are employed to generate the model. The learning may be performed as part of training. Training the model may include obtaining a set of training data and adjusting characteristics of the model to obtain a desired model output. For example, three characteristics may be associated with a desired item location. In such instance, the training may include receiving the three characteristics as inputs to the model and adjusting the characteristics of the model such that for each set of three characteristics, the output device state matches the desired device state associated with the historical data.

In some implementations, the training may be dynamic. For example, the system may update the model using a set of events. The detectable properties from the events may be used to adjust the model.

The model may be an equation, artificial neural network, recurrent neural network, convolutional neural network, decision tree, or other machine-readable artificial intelligence structure. The characteristics of the structure available for adjusting during training may vary based on the model selected. For example, if a neural network is the selected model, characteristics may include input elements, network layers, node density, node activation thresholds, weights between nodes, input or output value weights, or the like. If the model is implemented as an equation (e.g., regression), the characteristics may include weights for the input parameters, thresholds, or limits for evaluating an output value, or criterion for selecting from a set of equations.

Once a model is trained, retraining may be included to refine or update the model to reflect additional data or specific operational conditions. The retraining may be based on one or more signals detected by a device described herein or as part of a method described herein. Upon detection of the designated signals, the system may activate a training process to adjust the model as described.

Further examples of machine learning and modeling features which may be included in the embodiments discussed above are described in "A survey of machine learning for big data processing" by Qiu et al. in EURASIP Journal on Advances in Signal Processing (2016) which is hereby incorporated by reference in its entirety.

As used herein, the terms "determine" or "determining" encompass a wide variety of actions. For example, "determining" may include calculating, computing, processing, deriving, generating, obtaining, looking up (e.g., looking up in a table, a database or another data structure), ascertaining and the like via a hardware element without user intervention. Also, "determining" may include receiving (e.g., receiving information), accessing (e.g., accessing data in a memory) and the like via a hardware element without user intervention. "Determining" may include resolving, selecting, choosing, establishing, and the like via a hardware element without user intervention.

As used herein, the terms "provide" or "providing" encompass a wide variety of actions. For example, "providing" may include storing a value in a location of a storage device for subsequent retrieval, transmitting a value directly to the recipient via at least one wired or wireless communication medium, transmitting or storing a reference to a value, and the like. "Providing" may also include encoding, decoding, encrypting, decrypting, validating, verifying, inserting and the like via a hardware element.

## Claims

1. A system comprising:
an ultrasonic flow sensor that includes a flow tube, a first piezoelectric sensor or transducer arranged at an upstream position of the flow tube, and a second piezoelectric sensor or transducer arranged at a downstream position of the flow tube; and
at least one processor configured to:
provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof;
receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points;
identify an attribute of the time-series waveform; and
determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or
transducer, the second piezoelectric sensor or transducer, or any combination thereof.

2. The system of claim 1, wherein the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

3. The system of claim 2, wherein the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output from the machine learning model the peak or the zero-crossing of the time-series waveform.

4. An ultrasonic flow sensor comprising:
a flow tube;
a first piezoelectric sensor or transducer arranged at an upstream position of the flow tube;
a second piezoelectric sensor or transducer arranged at a downstream position of the flow tube; and
at least one processor configured to:
provide an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof, wherein the plurality of excitation pulses of the excitation pulse pattern includes at least one of the following: a plurality of different pulse widths, a plurality of different voltage levels, or any combination thereof;
receive, from the ultrasonic flow sensor, a time-series waveform that includes a plurality of amplitudes of the at least one ultrasonic signal received at the other of the first piezoelectric sensor or transducer, the second piezoelectric sensor or transducer, or any combination thereof sampled at a plurality of time points;
identify an attribute of the time-series waveform; and
determine, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

5. The system of claim 1 or the ultrasonic flow sensor of claim 4, wherein the at least one processor is configured to identify the attribute of the time-series waveform by:
applying at least one pattern matching algorithm to the time-series waveform, or
comparing the time-series waveform to at least one reference time-series waveform, wherein the at least one reference time-series waveform is determined based on a plurality of time-series waveforms generated by a plurality of ultrasonic flow sensors in response to the excitation pulse pattern.

6. The system of claim 1 or the ultrasonic flow sensor of claim 4, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

7. The system of claim 1 or the ultrasonic flow sensor of claim 4, wherein the at least one processor is further configured to:
provide an indication associated with the transit time of the at least one ultrasonic signal.

8. The ultrasonic flow sensor of claim 4, wherein the attribute of the time-series waveform includes a peak or a zero-crossing of the time-series waveform, wherein the at least one processor is configured to identify the attribute of the time-series waveform by analyzing the time-series waveform to identify the peak or the zero-crossing of the time-series waveform, and wherein the at least one processor is configured to determine, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

9. The ultrasonic flow sensor of claim 8, wherein the at least one processor is configured to analyze the time-series waveform to identify the peak or the zero-crossing of the time-series waveform by providing time-series waveform data associated with the time-series waveform as input to a machine learning model trained to identify the peak or the zero-crossing of the time-series waveform and receiving as output.

10. A method for speed-of-sound tracking in an ultrasonic flow sensor that includes a flow tube, a first piezoelectric sensor or transducer arranged at an upstream position of the flow tube, and a second piezoelectric sensor or transducer arranged at a downstream position of the flow tube, the method comprising:
providing, with at least one processor, an excitation pulse pattern including a plurality of excitation pulses to at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one ultrasonic signal to the other of the first piezoelectric sensor or transducer, the second piezoelectric sensor or transducer, or any combination thereof,
wherein the plurality of excitation pulses of the excitation pulse pattern includes at least one of the following: a plurality of different pulse widths, a plurality of different voltage levels, or any combination thereof;
receiving, with the at least one processor, from the ultrasonic flow sensor, a time-series waveform that includes a plurality of amplitudes of the at least one ultrasonic signal received at the other of the first piezoelectric sensor or transducer, the second piezoelectric sensor or
transducer, or any combination thereof sampled at a plurality of time points;
identifying, with the at least one processor, an attribute of the time-series waveform; and
determining, with the at least one processor, based on the attribute of the time-series waveform, a transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof.

11. The method of claim 10, wherein identifying, with the at least one processor, the attribute of the time-series waveform includes:
applying, with the at least one processor, at least one pattern matching algorithm to the time-series waveform.

12. The method of claim 10, wherein identifying, with the at least one processor, the attribute of the time-series waveform includes:
comparing, with the at least one processor, the time-series waveform to at least one reference time-series waveform, wherein the at least one reference time-series waveform is determined based on a plurality of time-series waveforms generated by a plurality of ultrasonic flow sensors in response to the excitation pulse pattern.

13. The method of claim 10, wherein the plurality of excitation pulses of the excitation pulse pattern further includes a different number of pulses than a previous excitation pulse pattern previously provided to the at least one of the first piezoelectric sensor or transducer, the second piezoelectric sensor or transducer, or any combination thereof to cause the least one of the first piezoelectric sensor or transducer, the second piezoelectric sensor or transducer, or any combination thereof to transmit at least one previous ultrasonic signal to the other of the first piezoelectric sensor or transducer, the second piezoelectric sensor or transducer, or any combination thereof.

14. The method of claim 10, further comprising:
providing, with the at least one processor, an indication associated with the transit time of the at least one ultrasonic signal.

15. The method of claim 10, wherein the attribute of the time-series waveform includes a peak or a zero-crossing of the time-series waveform, wherein identifying, with the at least one processor, the attribute of the time-series waveform includes analyzing, with the at least one processor, the time-series waveform to identify the peak or the zero-crossing of the time-series waveform, wherein the at least one processor determines, based on the peak or the zero-crossing of the time-series waveform, the transit time of the at least one ultrasonic signal from the first piezoelectric sensor or transducer, the second piezoelectric sensor or transducer, or any combination thereof to the other of the first piezoelectric sensor or transducer, the second piezoelectric sensor or transducer, or any combination thereof, and wherein analyzing, with the at least one processor, the time-series waveform to identify the peak or the zero-crossing of the time-series waveform includes providing time-series waveform data associated with the time-series waveform as input to a machine learning model trained to identify the peak or the zero-crossing of the time-series waveform and receiving as output from the machine learning model the peak or the zero-crossing of the time-series waveform.
